# EUROPEAN PATENT APPLICATION

(11) **EP 4 794 186 A1**
(43) Date of publication of application: **19.08.2026**
(21) Application number: 25382131.8
(22) Date of filing: 17.02.2025
(51) Int. Cl.: H02N 1/04

(54) **TRIBOELECTRIC NANOGENERATOR AND MANUFACTURING METHOD THEREOF**

(71) Applicant: Consejo Superior De Investigaciones Científicas (CSIC), 28006 Madrid (ES)
(72) Inventor: MARTÍN-GONZÁLEZ, Marisol, 28006 Madrid (ES); GARCÍA COBOS, Carlos, 28006 Madrid (ES)
(74) Representative: Ungria López, Javier

(57) **Abstract**

Present invention refers to a triboelectric nanogenerator and manufacturing method thereof, comprising: an electrode having a composite material layer attached to the electrode; and a counter-electrode having a tribo-negative material layer attached to the counter-electrode, configured to contact the composite material layer by an external force; wherein the composite material layer comprises a tridimensional nanostructure of a first tribo-positive isolating material having a plurality of interconnected pores filled with a second tribo-positive isolating polymeric material.

## Description

### OBJECT OF THE INVENTION

The object of the present invention refers to a triboelectric nanogenerator and a method of manufacturing thereof. More particularly, the invention relates to a triboelectric nanogenerator comprising a nanostructured composite material layer with enhanced triboelectric properties and outstanding mechanical stability. The energy generated may be used for example to power a sensor and transmitting signals by Bluetooth with the energy harvested.

### BACKGROUND OF THE INVENTION

Triboelectric nanogenerators (TENGs) have emerged as a transformative technology for harvesting mechanical energy from diverse environmental sources and converting it into usable electrical energy. Since their introduction about ten years ago, TENGs have garnered significant attention due to their high power densities, cost-effectiveness, and scalability, making them suitable for a wide range of applications, including human motion, vibrations, rotating tires, wind, and ocean waves. The fundamental operating principle of TENGs is based on the phenomena of contact electrification and electrostatic induction. When two materials with different electron affinities come into contact and then separate, charge transfer occurs, resulting in an electric potential difference that facilitates electron flow between electrodes, thereby generating an electric current.

Recent advancements in TENG technology have focused on improving their performance through various strategies such us optimizing surface charge densities of triboelectric materials via techniques like plasma treatment or charge injection. The selection of triboelectric materials is crucial, as factors including triboelectric polarity, relative permittivity, and mechanical properties significantly influence TENG efficiency. Furthermore, there is a growing trend toward utilizing environmentally friendly and bio compatible materials, such as polylactic acid (PLA), to address sustainability concerns. While PLA is widely used in applications like food packaging and electronics, its lower triboelectric coefficients and mechanical properties compared to traditional materials like PTFE or Kapton present challenges for TENG performance.

Moreover, some researchers have explored hybrid systems that integrates TENGs with other energy harvesting technologies, such as electromagnetic or piezoelectric generators, to achieve improved overall performance. Despite these advancements, challenges persist in enhancing the durability output stability, and energy conversion efficiency of TENGs. Ongoing research efforts are dedicated to addressing these issues, which are crucial for the widespread adoption of TENG technology in various applications, including wearable electronics and self-powered sensors. The potential for TENGs to contribute to sustainable energy solutions is significant, as they can effectively harvest mechanical energy from everyday activities, thereby reducing reliance on conventional energy sources.

### DESCRIPTION OF THE INVENTION

In order to achieve the objectives and avoid the drawbacks mentioned in previous section, a first aspect of present invention refers to a triboelectric nanogenerator which comprises an electrode having a composite material layer attached to the electrode, and a counter-electrode having a tribo-negative material layer attached to the counter-electrode. The counter-electrode is configured to contact the composite material layer by an external force. The composite material layer comprises a tridimensional nanostructure of a first tribo-positive isolating material having a plurality of interconnected pores filled with a second tribo-positive isolating polymeric material.

In one embodiment of the invention, the plurality of interconnected pores comprises a plurality of longitudinal holes crossing the composite material layer and a plurality of transversal channels connecting the longitudinal holes. The transversal channels have smaller diameters than the longitudinal holes, creating a network structure within the composite material layer.

In one embodiment of the invention, the first tribo-positive isolating material is anodic alumina (which is also known as *anodic aluminum oxide* or *AAO*)*,* which provides excellent mechanical properties and a high surface area for triboelectric charge generation.

In one embodiment of the invention, the second tribo-positive isolating polymeric material is preferably polylactic acid (PLA), which offers good compatibility with the anodic alumina structure and enhances the overall triboelectric performance of the composite layer.

In one embodiment of the invention, the tribo-negative material layer attached to the counter-electrode is preferably poly tetrafluoroethylene (PTFE).

The dimensions of the composite material layer and the tribo-negative material layer are optimized for efficient triboelectric charge generation. In one embodiment of the invention, the composite material layer has a thickness in a range of 10 µm to 100 µm. In one embodiment of the invention, the tribo-negative material layer has a thickness in a range of 50 µm to 100 µm. These thickness ranges ensure good contact between the layers during operation while maintaining flexibility and durability.

The nanostructure of the composite material layer is further characterized by the dimensions of its pores and channels. In one embodiment of the invention, the longitudinal pores preferably have a diameter ranging from 5 nm to 50 nm. In one embodiment of the invention, the transversal channels are spaced ranging from 150 nm to 10 µm. These dimensions create a high surface area for charge generation and allow for efficient filling of the pores with the second tribo-positive isolating polymeric material.

In one embodiment of the invention, the triboelectric nanogenerator further comprises an additional layer of bulk material attached to the tridimensional nanostructure. This bulk material is the same as the second tribo-positive isolating polymeric material, providing additional mechanical support and potentially enhancing the overall triboelectric performance.

According to one embodiment of the invention, the composite material layer further comprises a metal layer configured to contact the counter-electrode. In one specific embodiment, the metal layer is a gold comb-shaped mask having a plurality of gold teeth arranged in correspondence with a plurality of teeth from the first tribo-positive isolating material, where any low temperature deposition method suitable for polymers can be used for generating the metallic teeth as well as different distances between teeth. Thus, advantageously, the electric properties of the triboelectric nanogenerator are further improved. It is noted that other conductive metals can be used apart from gold.

In one embodiment of the invention, the tribo-negative material layer attached to the counter-electrode comprises a tridimensional nanostructure with a plurality of interconnected pores filled with a second tribo-negative material.

A second aspect of present invention refers to a method for manufacturing the triboelectric nanogenerator. The method comprises the following steps:
- providing a substrate of the first tribo-positive isolating material;
- performing an anodizing process of the substrate based on current density;
- forming the tridimensional nanostructure with the plurality of interconnected pores, as a result of performing the anodizing process;
- filling the plurality of interconnected pores with the second tribo-positive isolating polymeric material;
- obtaining the composite material layer as a result of the previous step;
- attaching the composite material layer to an electrode; and
- providing a counter electrode having a tribo-negative material layer configured to contact the composite material layer by an external force.

In one embodiment of the invention, the method further comprises attaching the composite material layer to the electrode by a double-sided copper tape. This ensures good electrical contact between the composite material layer and the electrode.

In one embodiment of the invention, the substrate used in the manufacturing process is preferably aluminum, which can be easily anodized to form the desired anodic alumina nanostructure.

The step of filling the plurality of interconnected pores with the second tribo-positive isolating polymeric material, in one embodiment of the invention, preferably comprises:
- heating a certain amount of polylactic acid to a range from 170 to 190 °C;
- pouring the polylactic acid in a liquid state into the tridimensional structure until said tridimensional structure is fully filled; and
- letting the polylactic acid in liquid state cool down until it solidifies.

This process ensures complete filling of the pores and channels within the anodic alumina nanostructure, creating a uniform and efficient composite material layer. Advantageously, the composite material layer would have a higher relative permittivity compared to bulk material due to the presence of the anodic alumina component.

In one embodiment of the invention, the method further comprises providing an additional layer of bulk material attached to the tridimensional nanostructure, wherein the bulk material is the second tribo-positive isolating polymeric material. This step can enhance the mechanical properties and potentially improve the triboelectric performance of the final device.

The triboelectric nanogenerator of the present invention offers several advantages over conventional TENGs. The unique composite material layer structure, combining a tridimensional nanostructure of anodic alumina with polymer, such as polylactic acid, filled pores, provides a high surface area for triboelectric charge generation. This structure also offers improved mechanical stability and durability compared to traditional TENG designs.

Furthermore, the use of biocompatible and environmentally friendly materials such as anodic alumina and polylactic acid makes this triboelectric nanogenerator suitable for harness energy for a wide range of applications, including wearable electronics, biomedical devices, and environmental monitoring systems.

The manufacturing method described in the invention allows for precise control over the nanostructure dimensions and composition, enabling optimization of the triboelectric performance for specific applications. The method is also scalable and can be adapted for large-scale production of triboelectric nanogenerators.

Thus, the PLA films fabricated with controlled 3D nanostructures of anodic alumina (i.e. anodic aluminum oxide (AAO)), porous anodic alumina (PAA), or nanoporous anodic alumina (NAA) templates result in the creation of 3D PLA/AAO composites which significantly enhance their triboelectric performance compared to bulk PLA. The improved performance is mainly attributed to the increased effective surface area and charge density due to the 3D nanostructures, as well as the higher relative permittivity of the 3D PLA/AAO composite compared to bulk PLA. The combination of PLA and Al2O3 in the composite creates a material with enhanced positive charge density capability, as both components have similar electron-donating properties.

Moreover, the 3D PLA/AAO composite shows better mechanical stability and durability than the 3D PLA NN due to the supporting AAO template which prevents the collapse of the nanostructured PLA during repeated contact-separation cycles, maintaining the beneficial 3D architecture that contributes to improved triboelectric performance. The presence of the AAO template in the composite not only augments the output performance but also bolsters the structural integrity of the PLA nanonetworks. This increased mechanical stability allows the composite to withstand repeated compression and separation cycles without significant degradation.

These advantages make the 3D PLA/AAO composite a superior choice for TENG applications, offering a balance of enhanced electrical output, improved mechanical properties, and long-term durability. There are many examples of TENG applications, such as smart clothing, wherein TENGs can be integrated to power different sensors and communication devices. Smart shoes, where these devices can generate electricity from body movement. Connected gloves and accessories to generate energy to power wearables, sensors or even a smart watch. Triboelectric-coated floors which can be provided with TENGs connected to loT devices to generate energy from the movement of people. Autonomous sensors, so TENGs can power touch sensors, forest fire detectors and dust and particle sensors without the need for batteries. Therefore, present invention contributes to sustainability by harnessing the mechanical energy generated by everyday movements that would otherwise be lost.

In summary, the present invention provides a novel triboelectric nanogenerator composite which can be tailor as desired with enhanced performance and a method for its manufacture. The unique composite material layer structure and the use of biocompatible materials open up new possibilities for energy harvesting and self-powered sensing applications in various fields.

### BRIEF DESCRIPTION OF THE FIGURES

To complete the description and in order to give a better understanding of the features of the invention, this specification is accompanied by a series of drawings that are an integral part of the same, wherein the following has been represented for illustration purposes and without limitation:
**Figure 1A** shows an embodiment of a 3D PLA composite with a first part arranged as bulk material and a second part arranged as nanostructured polymer.
**Figure 1B** shows an embodiment of a 3D PLA/AAO composite where the 3D PLA composite structure is combined with an AAO structure filled with PLA.
**Figure 2A** shows a schematic view of an electrode with a nanostructured triboelectric material according to an embodiment of the invention.
**Figure 2B** shows a schematic view of a counter-electrode with a polymer film according to an embodiment of the invention.
**Figures 3A-3D** show schematic representations of four different sample arrangements used in order to compare different performance of triboelectric nanogenerators.
**Figures 4A-4D** show scanning electron microscopy (SEM) micrographs corresponding to the different sample structures of Figures 3A-3D.
**Figure 5** illustrates the electricity generation process in a full cycle of two triboelectric pairs in a typical Triboelectric Nanogenerator (TENG), operated by a periodic movement performed by a pneumatic system.
**Figure 6** shows a schematic diagram of a specific system for testing triboelectric materials.
**Figures 7A-7D** illustrate the electrical performance of different PLA-based samples in comparison to a 3D-AAO template, including short-circuit voltage, current density, power density, and capacitor charging characteristics.
**Figures 8A** and **8B** show Scanning Electron Microscopy (SEM) micrographs of the 3D PLA/AAO composite and 3D PLA NN samples after undergoing triboelectric measurements providing insights into the structural integrity and potential changes in the samples following repeated use (around 1000 cycles).
**Figure 9** illustrates one example of use of the energy-harvesting method and system of present invention to send a signal via Bluetooth.
**Figure 10** illustrates one embodiment of the invention which exponentially improves the electric capture of the generated field by adding a comb-shape gold mask to the composite layer of the electrode.
**Figure 11** graphically represents a comparison between the results obtained by adding and not adding the gold comb to the composite layer of the electrode

A list of the different elements that have been represented in the figures and which form part of the invention is detailed below.
1. 3D PLA composite
2. Bulk material
3. Nanostructured polymer
4. Space between channels
5. Longitudinal nanowires
6. 3D PLA/AAO composite
7. AAO structure
10. Electrode
11. Copper sheet
12. Double-side copper tape
13. Nanostructured triboelectric material
14. Counter-electrode
15. Polymer film
16. Supporting structure
17. First platform
18. Base
21. Arm
22. Piston
23. Second platform
27. Pressure sensor
28. First copper electrode
29. Second copper electrode
30. PTFE
31. PLA
32. Full wave bridge rectifier
33. Capacitors
34. Microcontroller
35. First connection of GPIO pins
36. Second connection of GND pin
37. Resistor box
38. Bluetooth
39. Gold comb-shaped mask
40. Bulk PLA
41. PLA teeth
42. Gold teeth

### DETAILED DESCRIPTION OF THE INVENTION

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield a further embodiment.

A number of embodiments will be explained below. In this case, identical structural features are identified by identical reference symbols in the drawings. The structures shown in the drawings are not depicted true to scale but rather serve only for the better understanding of the embodiments.

Present invention refers to a triboelectric nanogenerator (TENG) with enhanced performance and a method for its manufacture. The triboelectric nanogenerator of present invention comprises a 3D PLA/AAO composite as one of the triboelectric materials of the device. On the other hand, a suitable counter triboelectric material is chosen, such as polytetrafluoroethylene (PTFE), which has a negative triboelectric polarity compared to the positive triboelectric polarity of the 3D PLA/AAO composite. Then, the two triboelectric materials are arranged in a contact-separation mode configuration, where one material is fixed, and the other can move periodically to induce triboelectric charge generation. Finally, copper electrodes are attached to the two triboelectric materials to collect the generated charges.

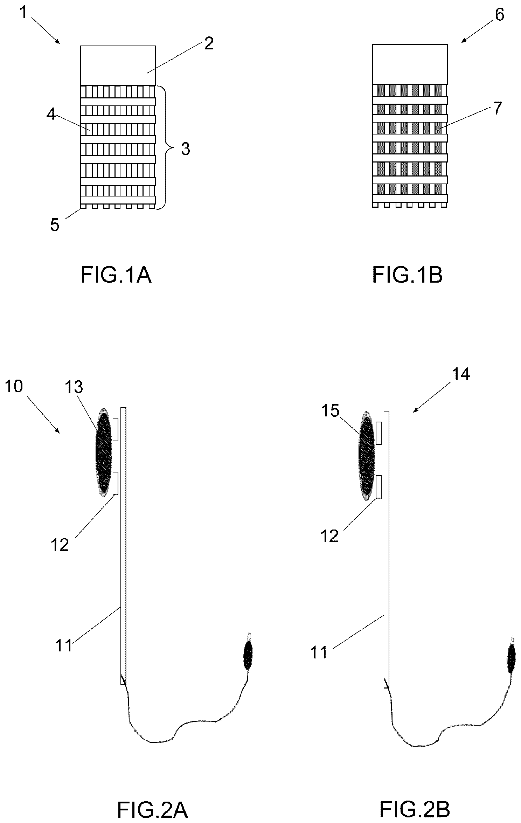

**Figure 1A** of the accompanying drawings illustrates an embodiment of 3D PLA composite **1** where a first part is arranged as bulk material **2** with a thickness of 20 µm to enhance the mechanical properties of the layer and the second part is arranged as nanostructured polymer **3** with a thickness in a range between 10 and 100 µm. The space **4** between the channels which interconnect the longitudinal nanowires **5** is in a range between 90 nm and 150 nm.

The 3D AAO (anodic aluminum oxide) templates are prepared from aluminum foils of 99.999 % purity, which are cleaned in four steps of 5 min of sonication with acetone, water, 2-propanol, and ethanol, respectively, and then electropolished in ethanol and perchloric acid (3:1) for 2 min at 20 V. After that, the aluminum foils are anodized in a 0.3 M H₂SO₄ sulfuric acid solution for 24 h at 0 °C with an applied voltage of 25 V. After this first anodization step, the formed alumina layer is removed by chemical etching (phosphoric acid 6 % wt., chromic oxide 1.8 % wt., and deionized water). A second anodization step starts with continuous anodization of 800 s, carried out in the same solution and at the same temperature as the first step. Then, a single pulse of hard anodization for 2 s at 32 V (which will later give rise to the transversal channel) is applied, followed by a further mild anodization at 25 V for 180 s. Once the second anodization process finishes, a chemical etching of the anodic aluminum oxide (AAO) template is performed using a H₃PO₄ acid solution (5 wt.% at 30 °C for 7 minutes) to open the transversal pore created with the hard anodization pulse of 32 V. The final structure consists of 3D-AAO with nanopores of around 50 nm in diameter with an interwire distance of 65 nm, interconnected with their first neighbors by perpendicular nanopores of around 30 nm in diameter.

Alternatively, the 3D AAO templates prepared by current pulse anodization are fabricated from aluminum foils of 99.999 % purity, which are cleaned in four steps of 5 min of sonication with acetone, water, 2-propanol, and ethanol, respectively, and then electropolished in ethanol and perchloric acid (3:1) for 2 min at 20 V. The anodization starts with continuous anodization of 3600 s with an applied current of 0.008 A, carried out in a 1.1 M H₂SO₄ 25% v/v EtOH solution at -1°C. Then, a stage of mild anodization for 828 s at 0.002 A (which will later give rise to the transversal channel) is applied, followed by a further hard anodization at 0.008 A for 207s. The final structure consists of 3D-AAO with nanopores of around 30 nm in diameter with an interwire distance of 65 nm, interconnected with their first neighbors by perpendicular nanopores of around 60 nm in diameter.

**Figure 1B** of the accompanying drawings illustrates an embodiment of 3D PLA/AAO composite **6** where the structure of the 3D PLA composite remains the same but it also comprise the AAO structure **7** which is filled with PLA to make up the 3D PLA/AAO composite material layer of present invention.

**Figure 2A** of the accompanying drawings illustrates an electrode **10** made-up of a copper sheet **11,** a double-side copper tape **12** and a nanostructured triboelectric material 13, such as polylactic acid (PLA) or 3D PLA/AAO composite material. Similarly, **figure 2B** of the accompanying drawings illustrates a counter-electrode **14** made-up of a copper sheet **11,** a double-side copper tape **12** and a polymer film **15,** such as polytetrafluoroethylene (PTFE), commonly known as Teflon.

Therefore, the triboelectric nanogenerator (TENG) comprises two main components: an electrode **10** and a counter-electrode **14,** which are configured to come into contact and separate periodically to generate triboelectric charges.

The electrode **10** consists of three layers: a copper sheet **11** serving as the base conductive layer; a double-sided copper tape **12** for adhesion; and a layer of nanostructured triboelectric material **13** attached to the copper tape

The layer of nanostructured triboelectric material **13** is one of the key component of present invention. It comprises: a tridimensional nanostructure made of a first tribo-positive isolating material, preferably anodic alumina ; a plurality of interconnected pores within this nanostructure; and a second tribo-positive isolating polymeric material, preferably polylactic acid (PLA), filling these interconnected pores

The interconnected pores in the composite material layer consist of: longitudinal holes crossing the layer, with diameters ranging from 30 nm to 50 nm; and transversal channels connecting these longitudinal holes, spaced 90 nm to 150 nm apart.

The counter-electrode **14** consists of three layers: a copper sheet **11** serving as the base conductive layer; a double-sided copper tape **12** for adhesion; and a tribo-negative material layer of polymer film **15** attached to the copper tape.

The tribo-negative material layer of polymer film **15** is preferably made of polytetrafluoroethylene (PTFE), commonly known as Teflon.

The layer of nanostructured triboelectric material **13** on the electrode **10** and the tribo-negative material layer of polymer film **15** on the counter-electrode **14** are configured to come into contact with each other through an external force, typically applied by a fixed pneumatic system or other mechanical means included in clothes or shoes for example. Thus, the triboelectric nanogerator may take advantage of the contact-separation natural movement involved in arm or leg movements of users. In one embodiment of the invention, the thickness of the layer of nanostructured triboelectric material 13 ranges from 10 µm to 100 µm, while the thickness of the tribo-negative material layer of polymer film 15 ranges from 50 µm to 100 µm.

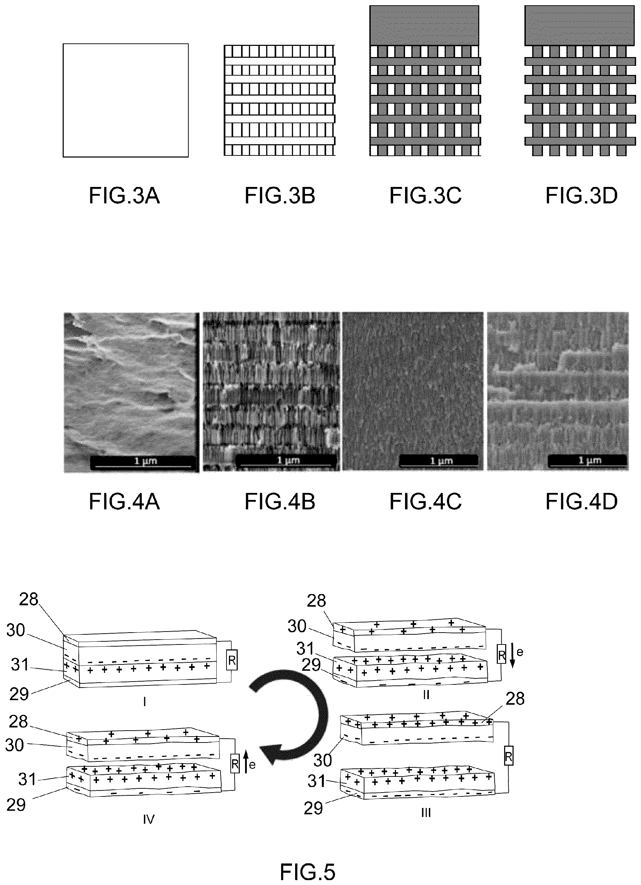

**Figures 3A-3D** of the accompanying drawings illustrates a schematic representation of four different sample arrangements used in the study of triboelectric nanogenerators (TENGs). Each of the figures depicts a different configuration. **Figure 3A** refers to PLA bulk, which represents a solid, unmodified polylactic acid (PLA) film without any nanostructuration. It serves as the reference sample for comparison with the nanoengineered structures. **Figure 3B** refers to 3D-AAO, which depicts a three-dimensional anodic aluminum oxide (AAO) template. The AAO template is characterized by a periodic structure with both longitudinal nanopores and transversal nanochannels, creating interconnections between the different longitudinal pores. **Figure 3C** refers to 3D PLA/AAO which illustrates a composite structure where PLA is infiltrated into the 3D-AAO template. The PLA fills the nanopores and nanochannels of the AAO, creating a nanostructured composite material. This structure combines the properties of both PLA and anodic alumina. **Figure 3D** refers to PLA NN which represents the PLA nanonetwork (NN) structure obtained after selectively dissolving the AAO template from the PLA/AAO composite. It shows a free-standing PLA film with a three-dimensional network of interconnected nanocavities, mirroring the structure of the original AAO template.

Figures **4A-4D** illustrates scanning electron microscopy (SEM) micrographs in correspondence to different sample structures of figures 3A-3D. Each image provides a cross-sectional view of the respective sample, revealing its internal structure and morphology. Specifically, **figure 4A** shows the SEM micrograph of the bulk polylactic acid (PLA) sample of **figure 3A****.** The image reveals a relatively smooth and uniform surface without any apparent nanostructuration. This serves as the reference sample for comparison with the nanoengineered structures. **Figure 4B** depicts the SEM micrograph of the empty three-dimensional anodic aluminum oxide (3D-AAO) template of **figure 3B****.** The image clearly shows the characteristic structure of the AAO template, featuring both longitudinal nanopores and transversal nanochannels. These nanochannels create interconnections between the different longitudinal pores, resulting in a complex three-dimensional network structure. The pore sizes are observed to be in the range of 30 to 40 nm. **Figure 4C** presents the SEM micrograph of the 3D PLA/AAO composite of **figure 3C****.** This image shows the result of infiltrating PLA into the 3D-AAO template. The PLA can be seen filling the nanopores and nanochannels of the AAO structure, creating a nanostructured composite material. The composite maintains the overall structure of the AAO template, with the PLA forming a network of interconnected nanowires or nanopillars within the anodic alumina framework. **Figure 4D** illustrates the SEM micrograph of the PLA nanonetwork (NN) structure of **figure 3D** obtained after selectively dissolving the AAO template from the PLA/AAO composite. This image reveals a free-standing PLA film with a three-dimensional network of interconnected nanocavities, mirroring the structure of the original AAO template. The nanostructure consists of PLA nanowires or nanopillars with sizes ranging from 30 to 40 nm, interconnected to form a complex three-dimensional network.

All images of **figures 4A-4D** include a scale bar of 1 µm, providing a reference for the size of the nanostructures observed. The total thicknesses of the nanostructured samples of **figures 4A-4D** are noted to be around 110-120 µm, with the nanostructured region being approximately 40 µm thick. These SEM micrographs highlight the structural differences that contribute to enhanced triboelectric performance.

**Figure 5** illustrates the electricity generation process in a full cycle of two triboelectric pairs, such as PTFE **30** and PLA **31,** in a typical Triboelectric Nanogenerator (TENG), operated by a periodic movement performed by a pneumatic system. The figure depicts four key stages of the process: 1) Initial Contact: The two triboelectric materials (PLA and PTFE) are brought into contact. During this stage, electrons transfer from the positive tribo-material (PLA **31)** to the negative tribo-material (PTFE **30),** resulting in opposite triboelectric charge densities (σ) on their surfaces. 2) Separation: As the piston rod recedes, the two tribo-pairs begin to separate. This separation induces an electric potential difference between the two tribo-pairs, which drives electrons to flow between a first and a second copper electrodes **28, 29** through the external load. 3) Full Separation: At maximum separation, the copper electrodes collect the induced charges, with negative charges on one electrode and positive charges on the other. 4) Approaching Contact: As the piston rod moves forward again, the distance between the two triboelectric materials decreases. This causes electrons to flow between the copper electrodes in the opposite direction, reducing the amount of induced charges on the electrodes.

Therefore, to evaluate the performance of the different samples of **figures 3A-3D****,** a pneumatic measurement setup is used for dielectric-to-dielectric contact-mode triboelectric testing. The setup mainly consists of a piston rod that moves a vertical plate forward and backward at a fixed frequency. Thus, this creates the periodic contact-separation motion between the triboelectric materials.

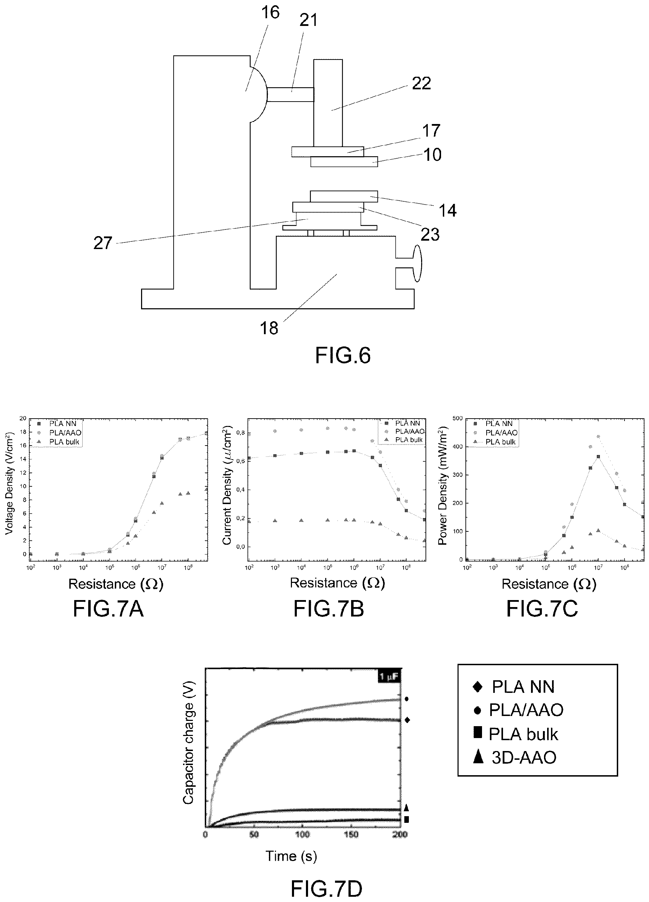

**Figure 6** of the accompanying drawings illustrates a specific embodiment of a system for testing triboelectric materials that includes a supporting structure **16** having a first platform **17** arranged on the base **18** of the supporting structure **16.** There is a glass plate mounted on the first platform **17.** The counter-electrode **14** is fixed to the glass plate by means of a double-side tape. The supporting structure **16** has an arm **21** horizontally extending from the top part to place a piston **22** mechanism vertically over the first platform **17,** where a second platform **23** is arranged at the bottom part of the piston **22** mechanism. There is also a glass plate mounted on the second platform **23.** The electrode **10** is fixed to the glass plate by means of a double-side tape. The piston **22** mechanism is operatively associated to a drive system which controls the movement of the piston. Force measurement means are provided associated to the first platform **17** to measure force during contact of the electrodes **10, 14.** For example, a pressure sensor **27** is arranged under the first platform **17** to eventually sense the pressure applied by the piston **22.**

Two triboelectric pairs are attached to the system for testing triboelectric materials: one pair is the sample being tested (PLA-based material); and the other pair is a polytetrafluoroethylene (PTFE) film with a thickness of approximately 50 µm, chosen as the counter triboelectric material with negative tribo-polarity. Then, copper electrodes are attached to each triboelectric material to collect the induced charges. When the layer of nanostructured triboelectric material **13** and the tribo-negative material layer of polymer film **15** come into contact and then separate, electrons transfer from the positive tribo-material (PLA/Al2O3 composite) to the negative tribo-material (PTFE). This charge transfer creates an electric potential difference that drives electrons to flow between the copper electrodes through an external circuit, generating an electric current. In order to measure the electrical outputs of the system, an external circuit with variable load resistance (ranging from 100 Ω to 470 MΩ) is provided. Alternatively or in combination, capacitors (1 µF and 10 µF) connected through a full bridge diode rectifier are provided to evaluate energy storage capabilities. Therefore, this pneumatic system allows for controlled and repeatable testing of the triboelectric performance of different samples under consistent conditions of temperature, pressure, and frequency. The setup measures key parameters such as short-circuit voltage, current density, and power density as a function of the applied load resistance.

Figures **7A-7D** illustrate the electrical performance of different PLA-based samples in comparison to a 3D-AAO template. Specifically, the graph of **figure 7A** shows the short-circuit voltage output of the samples as a function of load resistance, ranging from 100 Ω to 470 MΩ. The 3D PLA/AAO composite demonstrates the highest voltage output, reaching approximately 17.9 V/cm². The 3D PLA NN sample follows with a maximum voltage of about 17.8 V/cm². The bulk PLA sample shows the lowest performance, with a maximum voltage of around 9.52 V/cm². The 3D-AAO template alone also shows some voltage output, but lower than the PLA-based samples. The graph of **figure 7B** depicts the current density output of the samples across the same range of load resistances, ranging from 100 Ω to 470 MΩ. The 3D PLA AAO composite shows the highest current density, peaking at approximately 0.83 µA/cm². The 3D NN sample follows closely with a maximum current density of about 0.67 µA/cm². The bulk PLA sample again shows the lowest performance, with a maximum current density of around 0.18 µA/cm². The 3D-AAO template shows minimal current density output. The graph of **figure 7C** illustrates the power density output of the samples across the load resistance range, ranging from 100 Ω to 470 MΩ. The 3D PLA/AAO composite demonstrates the highest power density, reaching a maximum of about 436 mW/m² at a load resistance of 68 MΩ, increasing almost 5 times when compared to the bulk PLA power density. The 3D PLA NN sample follows with a peak power density of approximately 365 mW/m². The bulk PLA sample shows the lowest performance, with a maximum power density of around 102 mW/m². The 3D-AAO template alone shows minimal power density output. The graph of **figure 7D** shows the charging voltage over time for a 1 µF capacitor connected to the different samples. The 3D PLA/AAO composite and the 3D PLA NN samples demonstrate the fastest charging rates and reach the highest voltages, with both curves nearly overlapping. The bulk PLA sample shows a significantly lower charging rate and final voltage. The enhanced performance of the nanostructured samples is consistent with their superior triboelectric properties observed in the other electrical measurements (voltage, current, and power density) shown in the previous figures. In all cases, the nanostructured PLA samples (mainly 3D PLA/AAO composite) significantly outperform the bulk PLA sample, demonstrating the effectiveness of the nanoengineering approach in enhancing the triboelectric performance of the material.

For energy storage and utilization of the triboelectric nanogenerator of present invention, according to one embodiment of the invention the triboelectric nanogenerator is connected to a full-bridge rectifier circuit to convert the alternating current (AC) output to direct current (DC). Then, the generated DC energy is stored in capacitors of different capacitance values (e.g., 1 µF and 10 µF), so the energy will be available to power various electronic devices or sensors, showcasing one of the practical applications of the 3D PLA/AAO-based TENG.

The combination of PLA and Al2O3 in the composite creates a material with enhanced positive charge density capability, as both components have similar electron-donating properties. Moreover, the incorporation of Al2O3 from the AAO template into the composite increases the effective permittivity of the material which leads to improved surface charge density and enhanced triboelectric performance.

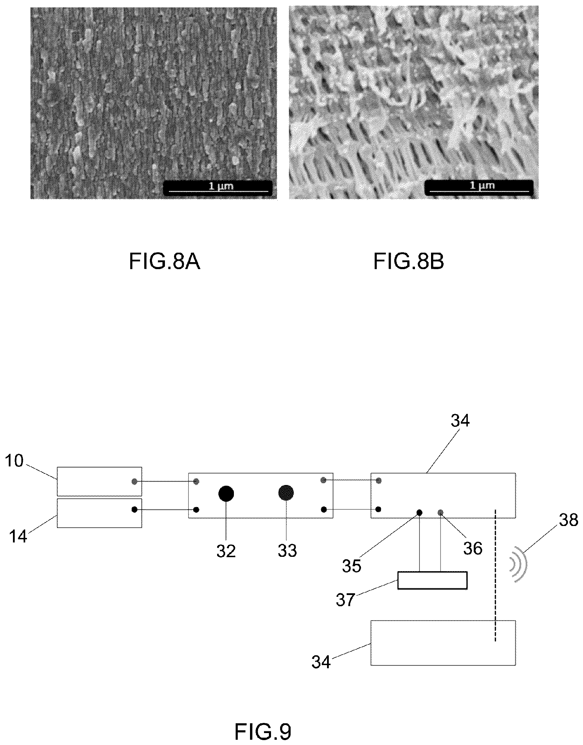

Many applications of triboelectric nanogenerator imply constant usage of the contact-separation process which may result in structural damages. **Figures 8A** and **8B** presents Scanning Electron Microscopy (SEM) micrographs of the 3D PLA/AAO composite and 3D PLA NN samples after undergoing triboelectric measurements, which involved approximately 1000 cycles. The figure provides insights into the structural integrity and potential changes in the samples following repeated use. Specifically, **figure 8A** shows a cross-sectional SEM micrograph of the 3D PLA/AAO composite after triboelectric testing. The image reveals that the PLA-filled AAO template structure remains largely intact, closely resembling its pre-measurement state as seen in **Figure 4C****.** The composite's thickness was measured to be approximately 40 µm, which is consistent with the thickness observed prior to triboelectric characterization. This observation suggests that the presence of the AAO template not only enhances the output performance (as demonstrated in **Figures 7A-7D****,** but also significantly contributes to the structural integrity of the PLA nanonetworks and the overall mechanical stability of the composite. On the other hand, **figure 8B** displays a cross-sectional SEM micrograph of the free-standing 3D PLA NN structure after triboelectric measurements. While the image shows some deformation compared to its pre-measurement state **(****Figure 4D****),** the overall 3D nanonetwork structure is still discernible. Traces of the original NN morphology are visible, indicating that the structure has only partially maintained its pre-measurement configuration. The thickness of the 3D PLA NN sample was measured to be approximately 35 µm, which is slightly reduced compared to its original thickness. This reduction in thickness suggests some deformation of the nanostructure occurred during the triboelectric testing process.

Therefore, these SEM analyses of **figures 8A and 8B** after triboelectric testing demonstrate that the incorporation of the AAO template plays a crucial role in not only improving the electrical performance of the device but also in maintaining the structural integrity of the nanoengineered films, effectively preventing the collapse of the nanostructure over repeated use cycles.

**Figure 9** illustrates one example of use of the energy-harvesting method and system of present invention to successfully send a signal via Bluetooth **38** with the goal of measuring a resistance, in such a way as to simulate a resistor-based sensor. To further prove the energy-storing efficiency of the developed composite material layers, energy generated at the electrodes **10, 14** is stored in capacitors **33.** In this specific embodiment, four 1N4148 diodes are used to rectify the output of the electrodes **10, 14,** on a full wave bridge rectifier **32** configuration. The resulting signal is used to charge four capacitors, which are selected in this specific embodiment to get an equivalent capacitor of 27 µF: a 22 µF electrolytic, a 1 µF metalized polypropylene and two 2 µF metalized propylene.

With the goal of measuring a resistance, in such a way as to simulate a resistor-based sensor, and send the measured value via Bluetooth, two LaunchXL-CC2640R2 microcontroller **34** development boards are used. One of them is connected to a computer through USB, receiving the RF data and sending it to a LabVIEW program, and the other, responsible for the resistance measurement and the data transmission, is powered by the energy stored in the charged capacitors **33.** The following describes the data transmission microcontroller setup. Between a first connection **35** of one of the GPIO pins of the microcontroller **34** and a second connection **36** of the GND pin of the microcontroller **34,** a resistor box **37** is connected in series. The resistor box comprises two resistors placed in series: an external resistance which we want to measure and a 6.8kOhm resistor. The voltage on that GPIO pin and on the connection point between the two resistors are measured using two channels of an integrated digital-to-analogue converter DAC of the microcontroller. To save power the GPIO pin is kept HIGH only during the measurement duration. The ratio of the voltages is then calculated and sent via Bluetooth **38.** This allows for the calculation of the external resistance by the LabVIEW program. Capacitors **33** have to be charged to around 3.8 V in order for the microcontroller **34** to be kept powered throughout the whole measurement and data transmission process. At the end, the voltage stays around 1.4 V. The microcontroller **34** is thus left disconnected from the capacitors **33** until the 3.8 V is reached. This voltage is measured periodically using a Keithley 6517B electrometer and, once 3.8 V is reached, the rest of the circuit is disconnected from the capacitors and the microcontroller connected. According to this specific setup, the triboelectric nanogenerator took around 45 minutes to charge the capacitors **33** from 1.4 V to 3.8 V. That is, according to this example of use, it is possible to turn on a sensor in a remote location, take a measurement and transmit it via Bluetooth every 45 minutes, powered just by the energy generated by the triboelectric nanogenerator of the present invention.

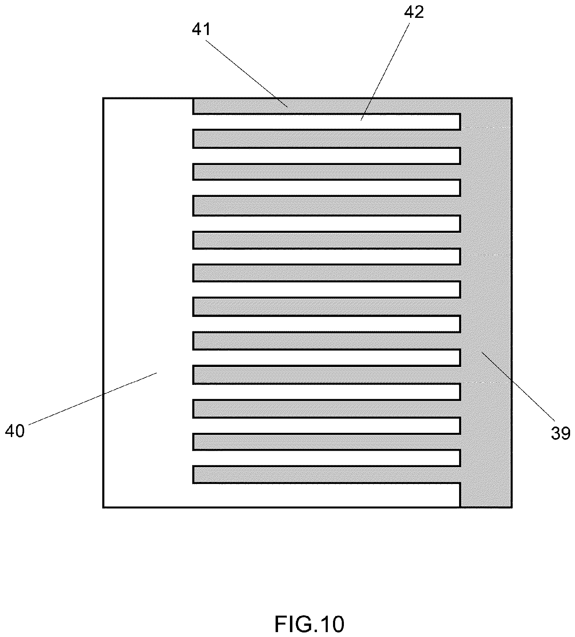

**Figure 10** illustrates one embodiment of the invention which exponentially improves the electric capture of the generated field. The contact surface or total surface covered by the "gold comb" considered in this embodiment is sized 15mm x 15mm, having the gold comb a thickness of 25nm, (although other sizes and shapes can be used in different embodiments). On one side of the layer, a section **40** of bulk PLA material is arranged in a 5 mm wide, from where a plurality of 0,75 mm wide teeth **41** of the comb emerge around 8,5mm. Thus, a gold comb-shaped mask **39** is sputter at the contact side/face of the PLA material. Specifically in this embodiment, the arrangement left 1,5mm to a layer of gold on the opposite side with also a comb shape, having a plurality of gold teeth **42** filling the gaps between PLA teeth. With this improvement, the collected electric signal has increased, at least, twice. Compared a current nanostructured material versus a nanostructured sample with the mask **39,** the voltage has increased almost twice (from 22 to 43 V/cm²) and the intensity has also increased from 4 to 9 µA/cm², concluding that the power has achieved a threefold increase in signal. This is just an illustrative example, as there are other configurations (not just a comb shape) and other metals (not just gold) that may also improve the electric properties of the nanogenerator. The reason of the improvement, despite having less surface area available for contact between the composite material layer of the electrode and the counter electrode, is because the charges are collected right there and do not have to travel through the entire piece of PLA to be collected on the copper tape arranged behind it.

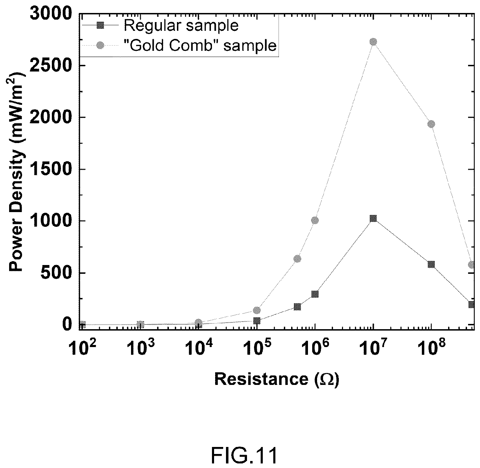

**Figure 11** graphically represents a comparison between the results obtained by adding and not adding the gold comb **39** to the composite layer of the electrode. It can be observed that the improvement in the results is significant. Regarding the specific configuration in the shape of a comb and the selection of gold for its manufacture, they respond to a particular embodiment of the invention, but improvements in the results are also obtained with other geometric arrangements and conductive metallic materials.

A tribo-negative material is a material that tends to acquire a negative electrical charge when brought into contact with a different material and then separated. In the context of triboelectric nanogenerators, tribo-negative materials are those that have a tendency to gain electrons during the contact-separation process. A tribo-positive material, on the other hand, is a material that tends to acquire a positive electrical charge when brought into contact with a different material and then separated. In triboelectric nanogenerators, tribo-positive materials are those that have a tendency to lose electrons during the contact-separation process.

In the context of the present invention, polylactic acid (PLA) and anodic alumina are examples of tribo-positive materials, while polytetrafluoroethylene (PTFE) is an example of a tribo-negative material. The pairing of these materials with opposite triboelectric polarities enhances the charge generation in the triboelectric nanogenerator.

The present invention is not limited by the embodiment disclosed herein. Other embodiments can be made by persons skilled in the art in light of this description. In consequence, the scope of the invention is defined by the following claims.

## Claims

1. A triboelectric nanogenerator, comprising:
an electrode (10) having a composite material layer (6) attached to the electrode; and
a counter-electrode (14) having a tribo-negative material layer (15) attached to the counter-electrode (14), configured to contact the composite material layer (6) by an external force;
**characterized by** the composite material layer (6) comprises a tridimensional nanostructure (7) of a first tribo-positive isolating material having a plurality of interconnected pores filled with a second tribo-positive isolating polymeric material (3).

2. The triboelectric nanogenerator according to claim 1 wherein the plurality of interconnected pores comprises a plurality of longitudinal holes crossing the composite material layer and a plurality of transversal channels connecting the longitudinal holes, wherein the transversal channels have smaller diameters than the longitudinal holes.

3. The triboelectric nanogenerator according to any one of previous claims wherein the first tribo-positive isolating material is anodic alumina.

4. The triboelectric nanogenerator according to any one of previous claims wherein the second tribo-positive isolating polymeric material is polylactic acid (PLA).

5. The triboelectric nanogenerator according to any one of previous claims wherein the tribo-negative material layer attached to the counter-electrode is poly tetrafluoroethulene (PTFE)

6. The triboelectric nanogenerator according to any one of previous claims wherein the composite material layer has a thickness in a range of 10 µm to 100 µm.

7. The triboelectric nanogenerator according to any one of previous claims wherein the tribo-negative material layer has a thickness in a range of 50 µm to 100 µm.

8. The triboelectric nanogenerator according to any one of previous claims 2-7 wherein the longitudinal pores have a diameter ranging from 30 nm to 50 nm.

9. The triboelectric nanogenerator according to any one of previous claims wherein the transversal channels are spaced ranging from 90 nm to 150 nm.

10. The triboelectric nanogenerator according to any one of previous claims further comprising an additional layer of bulk material attached to the tridimensional nanostructure, wherein the bulk material is the second tribo-positive isolating polymeric material.

11. The triboelectric generator according to any one of previous claims wherein the composite material layer (6) further comprises a metal layer configured to contact the counter-electrode (14).

12. The triboelectric generator according to claim 11 wherein the metal layer is a gold comb-shaped mask (39) having a plurality of gold teeth (42) arranged in correspondence with a plurality of teeth (41) from the first tribo-positive isolating material.

13. Method for manufacturing the triboelectric nanogenerator according to any of claims 1-12, wherein the method comprises the following steps:
- providing a substrate of the first tribo-positive isolating material;
- performing an anodizing process of the substrate based on current density;
- forming the tridimensional nanostructure (7) with the plurality of interconnected pores, as result of performing the anodizing process;
- filling the plurality of interconnected pores with the second tribo-positive isolating polymeric material;
- obtaining the composite material layer (6) as result of the previous step;
- attaching the composite material layer to an electrode (10); and
- providing a counter-electrode (14) having a tribo-negative material layer configured to contact the composite material layer (6) by an external force.

14. Method according to claim 13 wherein filling the plurality of interconnected pores comprises:
- heating certain amount of polylactic acid to a range from 170 to 190 °C;
- pouring the polylactic acid in a liquid state into the tridimensional structure until said tridimensional structures is fully filled; and
- letting the polylactic acid in liquid state cool down until it solidifies.

15. Method according to any one of claims 13-14 further comprising sputtering a metal mask at one side of the composite material layer obtained.
